Europäisches Patentamt

European Patent Office

Office européen des brevets

(11) Veröffentlichungsnummer: **0 165 231**
A2

(12) # EUROPÄISCHE PATENTANMELDUNG

(21) Anmeldenummer: 85890110.1

(22) Anmeldetag: 15.05.85

(51) Int. Cl.⁴: **F 16 H 1/28**

(30) Priorität: 15.05.84 AT 1600/84

(43) Veröffentlichungstag der Anmeldung:
18.12.85 Patentblatt 85/51

(84) Benannte Vertragsstaaten:
CH DE FR GB IT LI SE

(71) Anmelder: **VOEST-ALPINE Aktiengesellschaft**
**Friedrichstrasse 4**
**A-1011 Wien(AT)**

(72) Erfinder: **Keuschnigg, Josef, Dipl.-Ing.**
**Hammer-Purgstall-Gasse 9**
**A-8330 Feldbach(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Planetenradgetriebe.**

(57) Bei einem Planetenradgetriebe mit einem Sonnenrad (1, 13), einem Hohlrad (2, 14) und zwei oder drei in einem Planetenradträger gelagerten im entsprechenden Zentriwinkel gegeneinander versetzt angeordneten Planetenrädern.(3, 4, 16), wobei zwei oder drei Planetenräder (4) sowie das Hohlrad (2, 16) und/oder das Sonnenrad (1, 13) schrägverzahnt sind und die Planetenräder (3, 4, 16) durch ein für alle Planetenräder gemeinsames, mit dem Planetenradträger mitrotierendes Abstützglied (8) entgegen dem durch die Schrägverzahnung bewirkten Axialschub abestützt sind, ist das Abstützglied um einen in der Achse (5, 18) des Sonnenrades (1, 13) liegenden Schwenkmittelpunkt (9) schwenkbar am Gehäuse (12) des Planetengetriebes abgestüzt ist. Die Planetenräder (3, 4, 16) sind im Planetenradträger präzise axial verschiebbar gelagert und die Abstützkräfte werden durch das Gehäuse (12) aufgenommen, so daß der Planetenradträger nicht durch Abstützkräfte belastet ist.

*FIG.2*

- 1 -

## Planetenradgetriebe

Die Erfindung bezieht sich auf ein Planetenradgetriebe mit einem Sonnenrad, einem Hohlrad und zwei oder drei in einem Planetenradträger gelagerten, im entsprechenden Zentriwinkel gegeneinander versetzt angeordneten Planetenrädern, wobei die zwei oder drei Planetenräder sowie das Hohlrad und/oder das Sonnenrad schrägverzahnt sind und die Planetenräder durch ein für alle Planetenräder gemeinsames, mit dem Planetenradträger mitrotierendes Abstützglied entgegen dem durch die Schrägverzahnung bewirkten Axialschub abgestützt sind.

Bei einem üblichen Planetenradgetriebe tritt der Nachteil auf, daß infolge von Bearbeitungsungenauigkeiten das Zahnspiel zwischen den Planetenrädern einerseits und dem Sonnenrad und dem Hohlrad anderseits geringfügig verschieden ist. Es werden daher die Zähne der Planetenräder in Anbetracht dieses ungleichmäßigen Zahnspieles in ungleicher Weise belastet. Dies hat zur Folge, daß die Zähne eines Planetenrades überbelastet werden, und dies hat wieder einen schnelleren Verschleiß des Planetenradgetriebes zur Folge.

Durch die Schrägverzahnung wird auf die Planetenräder ein Axialschub ausgeübt. Dadurch, daß nun die Planetenräder durch ein gemeinsames, mit dem Planetenradträger mitrotierendes Abstützglied entgegen diesem Axialschub abgestützt sind, erfolgt ein Ausgleich, wodurch alle Planetenräder gleichmäßig belastet werden. Eine derartige Ausbildung ist aus der DD-PS 26 599 bekanntgeworden. Gemäß dieser DD-PS sind die Planetenräder durch das gemeinsame Abstützglied gegen den Planetenradträger selbst abgestützt. Im Planetenradträger müssen die Planetenräder präzise gelagert sein. Wenn nun die einzelnen Planetenräder durch das gemeinsame Abstützglied gegen den Planetenradträger selbst abgestützt sind, so wird der Planetenradträger übermäßig beansprucht. Es wird daher die Präzision der Lagerung der Planetenräder im Planetenradträger beeinträchtigt und es wird auch die axiale Abstützung der Planetenräder unpräzise. Insbesondere bei Planetenradgetrieben für die Übertragung großer Kräfte ist daher, wenn das Abstützglied gegen den Planetenradträger selbst abgestützt ist, die gleichmäßige Belastung die Zähne aller Planetenräder nicht gewährleistet und es treten überdies auch große konstruktive Schwierigkeiten auf, da ja der rotierende Planetenradträger, welcher mit dem Abtrieb oder dem Antrieb verbunden ist, den Belastungen durch die Abstützkräfte nicht gewachsen ist.

Aufgabe der Erfindung ist es, ein Planetenradgetriebe zu schaffen, bei welchem auch bei Übertragung großer Leistungen die gleichmäßige Belastung der Zähne aller Planetenräder gewährleistet ist und welches eine robuste Konstruktion gewährleistet. Zur Erfüllung dieser Aufgabe besteht die Erfindung im wesentlichen darin, daß das Abstützglied um einen in der Achse des Sonnenrades liegenden Schwenkmittelpunkt schwenkbar am Gehäuse des Planetengetriebes abgestützt ist. Dadurch, daß das Abstützglied am Gehäuse des Planetenradgetriebes abgestützt ist, wird der Planetenradträger nicht durch die Abstützkräfte belastet. Das Gehäuse kann so robust ausgebildet sein, daß es die verhältnismäßig großen Abstützkräfte ohne weiteres aufnehmen kann, und da der Planetenradträger keine Abstützkräfte aufnehmen muß, ist die präzise Lagerung der Planetenräder im Planetenradträger in keiner Weise beeinträchtigt. Ein solches Planetenradgetriebe ist daher für größte Leistungen verwendbar und dies ist deshalb wichtig, weil gerade bei großen Leistungen die gleichmäßige Zahnbelastung aller Planetenräder von ausschlaggebender Bedeutung ist. Da das Abstützglied um einen in der Achse des Sonnenrades liegenden Schwenkmittelpunkt schwenkbar ist, sind die auf die Planetenräder wirkenden axialen Abstützkräfte völlig gleich, so daß ein präziser Ausgleich der Belastung der einzelnen Planetenräder gewährleistet ist. Die Planetenräder können sich so weit verschieben, daß die durch die

Schrägverzahnung ausgeübten Schubkräfte in axialer Richtung des Getriebes völlig gleich werden, und es wird dadurch der gleiche Zahndruck bei allen Planetenrädern mit Sicherheit gewährleistet. Im Falle von zwei Planetenrädern weist das Abstützglied die Form eines Waagebalkens auf und im Falle von drei Planetenrädern die Form eines Dreibeines. Hiebei liegt vorzugsweise der Schwenkmittelpunkt in der axialen Mitte des Sonnenrades, so daß der Planetenradträger um die Mitte des Sonnenrades schwenkbar ist, wodurch die Einstellung am günstigsten wird.

Zweckmäßig ist das Abstützglied mit einer kugeligen Fläche gegen eine Kugelpfanne abgestützt, deren Krümmungsmittelpunkt im Schwenkmittelpunkt liegt. Das Abstützglied kann aber auch kardanisch gelagert sein. Maßgeblich ist nur, daß es in Richtung des Achsschubes des Planetenrades frei schwenkbar ist, so daß es die durch die Schrägverzahnung ausgeübten Achsschübe ausbalanciert.

Bei in beiden Drehrichtungen antreibbaren Planetengetrieben wirkt der durch die Schrägverzahnung bewirkte Axialschub je nach der Drehrichtung nach verschiedenen Richtungen. Bei solchen Getrieben ist daher vorzugsweise zu beiden Seiten des Sonnenrades ein Abstützglied vorgesehen, von welchen je nach der Drehrichtung jeweils eines zur Wirkung gelangt. Insbesondere wenn zu beiden Seiten ein Abstützglied vorgesehen ist, ist es zweckmäßig, das Abstützglied begrenzt axial federnd gegen das Gehäuse abzustützen. Hiedurch werden die zu beiden Seiten des Sonnenrades befindlichen Abstützglieder dauernd in Anlage mit den Planetenrädern bzw. mit deren Achsen gehalten und die starre Abstützung gelangt dann zur Wirkung, wenn nach Überwindung eines nur sehr geringen Federweges das betreffende Abstützglied zum Tragen kommt.

Die Anordnung kann so getroffen sein, daß Sonnenrad und Hohlrad in verschiedenen senkrecht zur Achse des Planetengetriebes stehenden Radialebenen liegen und daß zwei Planetenräder, von welchen eines geradeverzahnt und eines schrägverzahnt ist und von welchen eines mit dem Sonnenrad und eines mit dem Hohlrad kämmt, gleichachsig und starr miteinander verbunden sind, wobei entweder das Hohlrad schrägverzahnt und das Sonnenrad geradeverzahnt ist, oder das Sonnenrad schrägverzahnt und das Hohlrad geradeverzahnt ist. In diesem Falle wird das Zahnspiel der schrägverzahnten Zahnräder durch Axialverschiebung der Planetenräder vergleichmäßigt.

Vorzugsweise ist das Hohlrad das schrägverzahnte Rad, so daß das Zahnspiel zwischen dem Hohlrad und den Planetenrädern vergleichmäßigt wird. Dadurch wird der Verschleiß des wesentlich kostspieligeren Hohlrades verringert. Abgesehen davon tritt das Problem des ungleichen Flankendruckes mehr am Hohlrad als am Sonnenrad auf. Hiebei können die beiden miteinander starr verbundenen Planetenräder verschiedene Durchmesser aufweisen, wobei vorzugsweise das mit dem Sonnenrad kämmende Planetenrad einen größeren Durchmesser aufweist als das mit dem Hohlrad kämmende Planetenrad. Durch die ungleichen Durchmesser der miteinander verbundenen Planetenräder wird eine zusätzliche Übersetzung des Planetenradgetriebes erreicht. Aus konstruktiven Gründen ist es einfacher, wenn das mit dem Sonnenrad kämmende Planetenrad den größeren Durchmesser aufweist, weil der Raum für das mit dem Hohlrad kämmende Planetenrad durch die Sonnenradwelle begrenzt ist.

Die Anordnung kann aber auch so getroffen sein, daß die Achsen der Planetenräder in Tangentialebenen liegen und die Achse des Sonnenrades und des Hohlrades kreuzen, daß die Planetenräder eine Schrägverzahnung aufweisen und daß das Hohlrad und/oder das Sonnenrad eine Schrägverzahnung aufweist. In diesem Fall kämmt jedes Planetenrad sowohl mit dem Sonnenrad als auch mit dem Hohlrad, so daß zusätzliche Planetenräder erspart werden. Die Schrägverzahnung ergibt auch hier wieder einen Axialschub auf die Planetenräder, der durch das am Gehäuse schwenkbar abgestützte, für alle Planetenräder gemeinsame Abstützglied aufgenommen wird. Es wird auch hier durch Verschiebung der Planetenräder in ihrer Achsrichtung eine Vergleichmäßigung des Zahndruckes bzw. des Zahnspieles erreicht. Wenn sowohl Sonnenrad als auch Hohlrad schrägverzahnt sind, so wird bei beiden der Flankendruck der Zähne vergleichmäßigt. Wenn eines der Räder geradeverzahnt ist, so ist dies vorzugsweise das Sonnenrad, da es wichtiger ist, den Flankendruck am Hohlrad zu vergleichmäßigen.

In der Zeichnung ist die Erfindung anhand von Ausführungsbeispielen schematisch veranschaulicht.

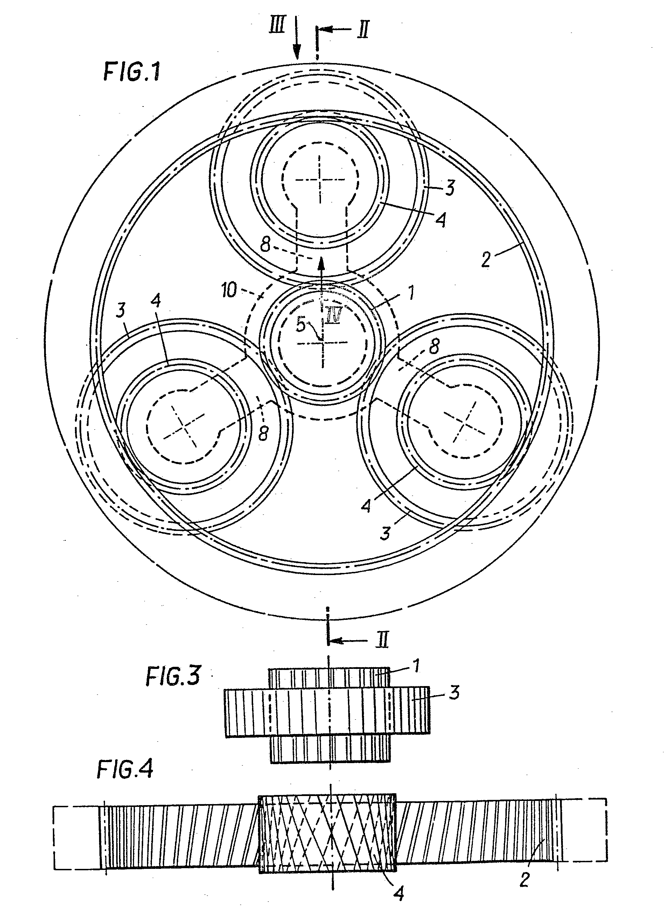

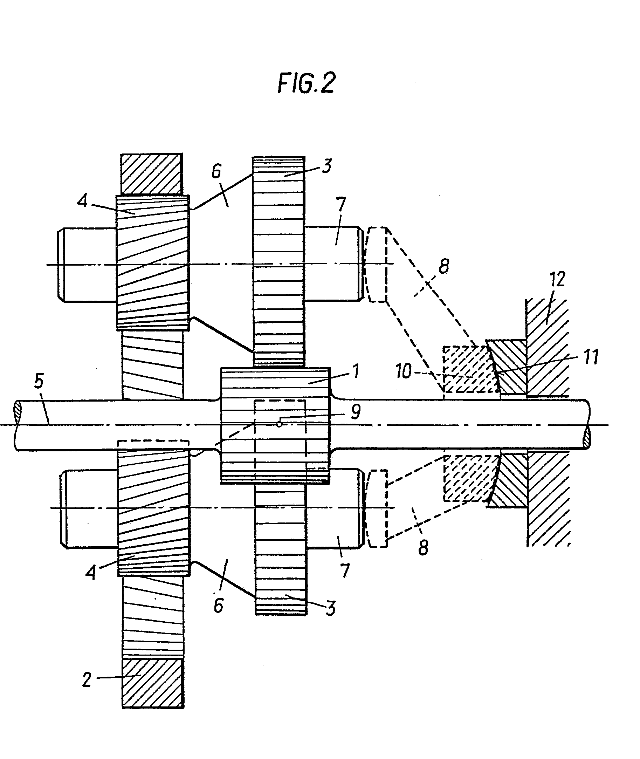

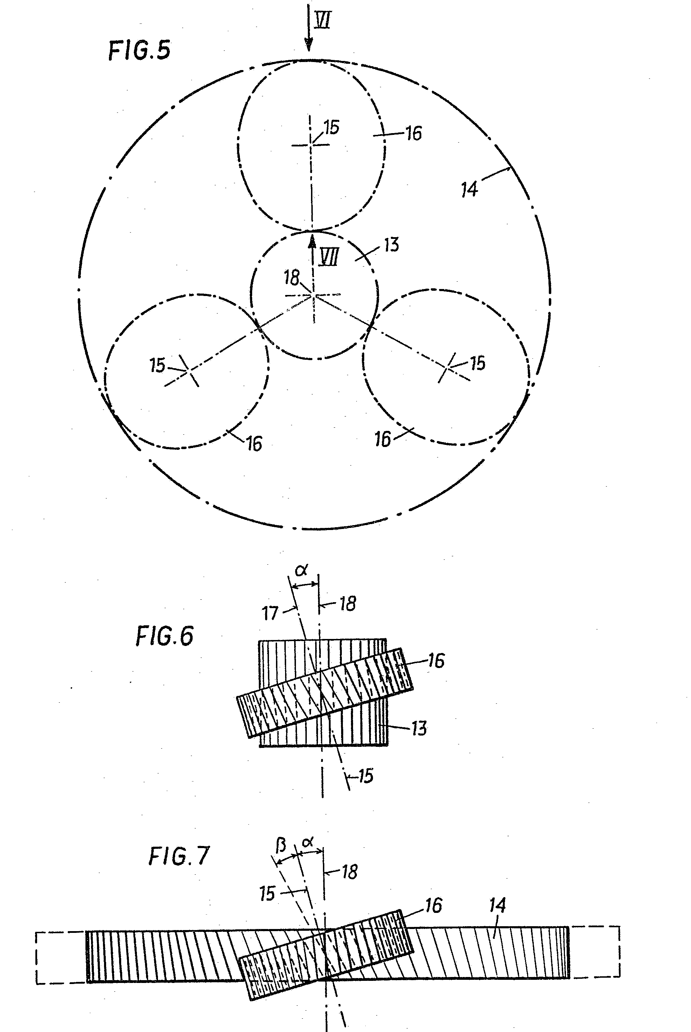

Fig. 1, 2, 3 und 4 zeigen ein Ausführungsbeispiel des Planetenradgetriebes, wobei Fig. 1 eine Axialansicht des Getriebes nach Fig. 2, Fig. 2 einen Schnitt durch das Hohlrad nach Linie II-II der Fig. 1, Fig. 3 eine schematische Darstellung von Sonnenrad und Planetenrad in Ansicht in Richtung des Pfeiles III der Fig. 1, und Fig. 4 eine schematische Darstellung von Hohlrad und Planetenrad in Ansicht in Richtung des Pfeiles IV der Fig. 1 zeigt. Fig. 5, 6 und 7 zeigen eine andere Ausführungsform des Planetenradgetriebes, wobei Fig. 5 eine Axialansicht des Getriebes in schematischer Form zeigt, Fig. 6 eine Darstellung des Sonnenrades und eines Planetenrades in Ansicht nach Pfeil VI der Fig. 5, und Fig. 7 eine Darstellung des Hohlrades und eines Planetenrades in Ansicht nach Pfeil VII der Fig. 5 zeigt.

Bei der Ausführungsform nach Fig. 1, 2 und 3 ist 1 das Sonnenrad und 2 das Hohlrad. Drei Gruppen von Planetenrädern 3, 4 sind um 120° versetzt an einem nicht dargestellten Planetenradträger gelagert, welcher um die Achse 5 des Sonnenrades 1 und des Hohlrades 2 drehbar ist. Die Planetenräder 3 und 4 sind gleichachsig gelagert und starr über einen Hals 6 miteinander verbunden. Das Sonnenrad 1 ist geradeverzahnt und kämmt mit den ebenfalls geradeverzahnten Planetenrädern 3. Das Hohlrad 2 ist schrägverzahnt und kämmt mit den gleichfalls schrägverzahnten Planetenrädern 4. Die Achsen 7 der Planetenräder 3 und 4 sind mit diesen Planetenrädern starr verbunden und im Planetenradträger axial verschieblich gelagert.

Durch die Schrägverzahnung der Planetenräder 4 und des Hohlrades 2 wird ein Axialschub ausgeübt und dieser Axialschub wird durch ein als Dreibein ausgebildetes, für alle Planetenräder 3 und 4 gemeinsames Abstützglied 8 aufgenommen. Dieses Abstützglied ist um einen Punkt 9, der in der axialen Mitte des Sonnenrades 1 liegt, schwenkbar. Dies ist dadurch verwirklicht, daß dieses Abstützglied einen kugeligen Körper 10 aufweist, der in einer am Gehäuse 12 festgelegten Kugelpfanne 11 abgestützt ist. Die Achsen 7 der Planetenräder 3 und 4 können sich daher geringfügig axial verlagern, wobei sie durch das gemeinsame Abstützglied 8 ausbalanciert sind. Dadurch wird gewährleistet, daß der Flankendruck zwischen den Zähnen des schrägverzahnten Hohlrades 2 und der schrägverzahnten Planetenräder 4 stets ausgeglichen ist und ein Flankenspiel kompensiert wird. Das Abstützglied 8 rotiert hiebei mit dem Planetenradträger mit. Bei einer Drehrichtung wird der durch die Planetenräder 4 ausgeübte Axialschub durch das in Fig. 2 dargestellte Abstützglied 8 aufgenommen. Bei der entgegengesetzten Drehrichtung des Getriebes wirkt der Axialschub der Planetenräder 4 in entgegengesetzter Richtung und bei einem in beiden Drehrichtungen antreibbaren Planetenradgetriebe ist daher an der bezogen auf Fig. 2 linken Seite ein ebensolches Abstützglied 8 angeordnet, welches auch wieder auf die Achsen 7 wirkt. Zwischen dem Gehäuse 12 und der Kugelpfanne 11 kann eine Federung vorgesehen sein, durch welche das Abstützglied 8 oder die beidseitigen Abstützglieder ständig mit den Achsen 7 in Anlage gehalten werden.

Bei der Ausführungsform nach Fig. 5, 6 und 7 sind Sonnenrad 13 und Hohlrad 14 in der selben Ebene angeordnet. Die Achsen 15 der Planetenräder 16 liegen in Tangentialebenen 17 und kreuzen die Achse 18 des Sonnenrades 13 und des Hohlrades 14. Die Planetenräder 16 liegen nun schräg zu der Ebene des Sonnenrades 13 und des Hohlrades 14 und sind schrägverzahnt. Das Sonnenrad 13 weist eine gerade Verzahnung auf und kann mit den Planetenrädern 16 kämmen, da diese eine Schrägverzahnung aufweisen und schräg liegen. Das Hohlrad 14 weist eine Schrägverzahnung auf und kämmt mit den Schrägverzahnungen der Planetenräder 16.

Die Achsen der Planetenräder schließen in der Draufsicht auf die Tangentialebenen 17 einen Winkel $\alpha$ mit der Achse 18 des Sonnenrades und des Hohlrades ein. Die Zähne der Planetenräder stehen unter dem Winkel $\beta$ zur Achse desselben. In der Darstellung der Zeichnung ist der Winkel $\alpha$ gleich dem Winkel $\beta$. Die Zähne des Sonnenrades stehen unter dem Winkel $(\alpha - \beta)$ zur Achse des Sonnenrades. Da nun, wie bereits erwähnt, $\alpha$ gleich $\beta$ ist, so ergibt sich für den Winkel, welchen die Zähne des Sonnenrades mit der Achse desselben einschließen, Null, d.h. in anderen Worten, das Sonnenrad ist, wie in Fig. 6 dargestellt, geradeverzahnt. Die Zähne des Hohlrades stehen unter dem Winkel $(\alpha + \beta)$ zur Achse desselben. Da $\beta$ gleich $\alpha$ ist, so ergibt sich somit ein Winkel von $2\alpha$, unter welchem die Zähne des Hohlrades zur Achse desselben stehen, wie dies in der Zeichnung, Fig. 7, dargestellt ist. Es kann naturgemäß auch der Winkel $\alpha$, unter welchem die Achse der Planetenräder zur Achse des Sonnenrades und Hohlrades geneigt ist, ungleich vom Winkel $\beta$ sein, unter welchem die Zähne der Planetenräder gegen die Achse derselben geneigt sind. In diesem Falle ergibt sich dann für das Sonnenrad 13 eine Schrägverzahnung.

Auf die Planetenräder 16 wird über die Schrägverzahnung nun wieder ein Axialschub ausgeübt. Zur Aufnahme dieses

- 8 -

Axialschubes ist wieder ebenso wie bei der Ausführungsform nach Fig. 1 bis 4 wenigstens zu einer Seite ein allseits schwenkbar gelagertes Abstützglied 8 vorgesehen, welches in den Fig. 5 bis 7 nicht dargestellt ist.

Patentansprüche:

1. Planetenradgetriebe mit einem Sonnenrad (1,13), einem Hohlrad (2,14) und zwei oder drei in einem Planetenradträger gelagerten, im entsprechenden Zentriwinkel gegeneinander versetzt angeordneten Planetenrädern (3, 4,16), wobei die zwei oder drei Planetenräder (4) sowie das Hohlrad (2,16) und/oder das Sonnenrad (1,13) schrägverzahnt sind und die Planetenräder (3,4,16) durch ein für alle Planetenräder gemeinsames, mit dem Planetenradträger mitrotierendes Abstützglied (8) entgegen dem durch die Schrägverzahnung bewirkten Axialschub abgestützt sind, dadurch gekennzeichnet, daß das Abstützglied (8) um einen in der Achse (5, 18) des Sonnenrades (1,13) liegenden Schwenkmittelpunkt (9) schwenkbar am Gehäuse (12) des Planetengetriebes abgestützt ist.

2. Planetenradgetriebe nach Anspruch 1, dadurch gekennzeichnet, daß der Schwenkmittelpunkt (9) in der axialen Mitte des Sonnenrades (1, 13) liegt.

3. Planetenradgetriebe nach Anspruch 1 oder 2, dadurch gekennzeichnet, daß das Abstützglied (8) mit einer kugeligen Fläche gegen eine Kugelpfanne (11) abgestützt ist, deren Krümmungsmittelpunkt im Schwenkmittelpunkt (9) liegt.

4. Planetenradgetriebe nach Anspruch 1 oder 2, dadurch gekennzeichnet, daß das Abstützglied (8) kardanisch gelagert ist.

5. Planetenradgetriebe nach einem der Ansprüche 1 bis 4, dadurch gekennzeichnet, daß bei in beiden Drehrichtungen antreibbaren Planetengetrieben zu beiden Seiten des Sonnenrades (1, 13) ein Abstützglied (8) angeordnet ist.

6. Planetenradgetriebe nach einem der Ansprüche 1 bis 5, dadurch gekennzeichnet, daß das Abstützglied (8) begrenzt axial federnd gegen das Gehäuse (12) abgestützt ist.

7. Planetenradgetriebe nach einem der Ansprüche 1 bis 6, dadurch gekennzeichnet, daß Sonnenrad (1) und Hohlrad (2) in verschiedenen senkrecht zur Achse (5) des Planetengetriebes stehenden Radialebenen liegen und daß zwei Planetenräder (3, 4), von welchen eines geradeverzahnt und eines schrägverzahnt ist und von welchen eines (3) mit dem Sonnenrad (1) und eines (4) mit dem Hohlrad (2) kämmt, gleichachsig und starr miteinander verbunden sind, wobei entweder das Hohlrad (2) schrägverzahnt und das Sonnenrad (1) geradeverzahnt ist oder das Sonnenrad (1) schrägverzahnt und das Hohlrad (2) geradeverzahnt ist.

8. Planetenradgetriebe nach Anspruch 7, dadurch gekennzeichnet, daß die beiden miteinander starr verbundenen Planetenräder (3, 4) verschiedene Durchmesser aufweisen, vorzugsweise das mit dem Sonnenrad (1) kämmende Planetenrad (3) einen größeren Durchmesser aufweist als das mit dem Hohlrad (2) kämmende Planetenrad (4).

9. Planetenradgetriebe nach einem der Ansprüche 1 bis 6, dadurch gekennzeichnet, daß die Achsen (15) der Planetenräder (16) in Tangentialebenen liegen und die Achse (18) des Sonnenrades (13) und des Hohlrades (14) kreuzen, daß die Planetenräder (16) eine Schrägverzahnung aufweisen und daß das Hohlrad (14) und/oder das Sonnenrad (13) eine Schrägverzahnung aufweist.

10. Planetenradgetriebe nach Anspruch 9, dadurch gekennzeichnet, daß das Sonnenrad (13) geradeverzahnt und das Hohlrad (14) schrägverzahnt ist.

FIG.1

FIG.3

FIG.4

FIG.2

0165231

FIG.5

FIG.6

FIG.7